# EUROPEAN PATENT SPECIFICATION

(11) **EP 0 598 671 B1**
(45) Date of publication and mention of the grant of the patent: **12.12.2001**
(21) Application number: 93480067.3
(22) Date of filing: 03.06.1993
(51) Int. Cl.: H04L 12/56, H04L 12/18, H04Q 11/04

(54) **Function distribution in a packet switched network**
Funktionsverteilung im Paketvermittlungsnetz
Distribution de fonction dans un réseau de commutation de paquets

(30) Priority: 19.11.1992 US 978609
(43) Date of publication of application: 25.05.1994
(73) Proprietor: International Business Machines Corporation, Armonk, N.Y. 10504 (US)
(72) Inventor: Derby, Jeffrey Haskell, Chapel Hill, NC 27514 (US); Drake, John Ellis, Jr., Pittsboro, NC 27312 (US); Dudley, John Gary, Raleigh, NC 27612 (US); Hervatic, Elizabeth Anne, Apex, NC 27502 (US); Janniello, James Patrick, Stamford, CT 06905 (US); Kaplan, Marc Adam, Katonah, NY 10536 (US); Kesner, Barry, Raleigh, NC 27612 (US); Koperda, Francis Richard, Raleigh, NC 27613 (US); Peters, Marcia Lambert, Pittsboro, NC 27312 (US); Potter, Kenneth Harvey, Jr., Raleigh, NC 27606 (US); Tsigler, Andrey Lev, F-06270 Villeneuve Loubet (FR); Marin, Gerald Arnold, Chapel Hill, NC 27514 (US); Gopal, Inder Sarat, Fort Lee, NJ 07024 (US); Cidon, Israel, IL-Haifa 32000 (IL)
(74) Representative: de Pena, Alain

(56) References cited:
- EP-A- 0 303 830
- EP-A- 0 404 339
- US-A- 4 813 038

## Description

### Technical Field

This invention relates generally to packet switched voice/data communication systems and, in particular, to method and apparatus for distributing network control functions among multiple processors within a node under the control of a copy function.

### Description of the Prior Art

Packet switched communication systems comprise two or more endpoints for sending and receiving packets of control or message data interconnected by a network of transmission links and nodes. A packet comprises relatively short digitized samples of information to be transferred between end users connected to network end points. Packet switched nodes are of two types, those located within the network proper known as network nodes and those located on the periphery of the network proper at the end points known as end nodes. Network nodes are interconnected with each other and to end nodes through transmission links. Nodes are in effect data processing systems including a bus and transmit/receive adapters connected to the transmission links. End nodes include additional adapters providing connections to end users such as printers and application programs. Likewise, both end nodes and network nodes may include adapters that handle control functions. The transmission links may be permanent in nature or dialed-up telephone connections. Transmission speeds in the gigabyte range with a selection of bandwidths are currently available. U.S. Patent 4,991,172 to Cidon et al describes a design for a packet network node.

The nodes within a packet switching network provide the high-speed backbone for switching packets between end points of the network. Each packet has a network header which includes control information and such further information that is necessary to allow that packet to be routed independently of other packets between and among individual nodes and transmission links within the network and at its end points. In addition to the network header, the packet includes user data and possibly a frame check sequence to allow for error detection.

Routing information for a packet is contained in a routing field in the network header of the packet. In commonly employed Automatic Network Routing (ANR), the routing field contains a string of labels, specifying a path through the network. Each label specifies at a specific node along the path either a transmission link to another node or terminal link to an end user. A link is connected to a node through a link adapter, which is coupled to the bus inside the node. When a packet arrives at a node through a link adapter, it is placed on the bus inside the node. The various link adapters on the bus look at the first label in the routing field of the network header of the packet. The link adapter that serves the link specified by that label will remove the packet from the bus, strip that label off, and transmit the packet on the appropriate link. A given link adapter may serve more than one link. Automatic Network Routing is described in "PARIS: An Approach to Integrated High-Speed Networks" by I. Cidon and I. S. Gopal, International Journal of Digital and Analog Cabled Systems, Vol. 1, No. 2, April-June, 1988, pages 77-85.

In addition to handling message packets which contain data to be conveyed from one end user to another, nodes in a packet switched network also need to perform various control functions. Examples of such control functions are bandwidth reservation, directory services, and topology database maintenance. Instructions to perform control functions and qualifying information on performing the functions are routed through the network as packets. For a node to perform these functions, packets are typically copied into memory within the node and retained for some limited period of time, until the control function instruction can be processed. In the current art, a copy bit is provided in a control byte in the network header of the packet. This copy bit indicates the packet must be processed by one or more nodes in the network. In ANR routing, the label for a given link also contains a "selective copy" bit as the first bit in the label. When this selective copy bit is active, the node with the outgoing link specified by that label copies the packet into its memory. If the selective copy bit in a label for a node is not active, the node simply forwards the packet through the network, to be copied into memory in another node or nodes where control functions are to be performed. The copy bit and the selective copy bit are further described in "New Models and Algorithms for Future Networks" by I. Cidon, I. S. Gopal, and S. Kutten, Proceedings of the 7th ACM Symposium on Principles of Distributed Computing, pp. 75-89.

In the current art, the control functions within a node are usually all performed by a processor on a single adapter. The processor may be on a link adapter, or it may be on a special adapter provided for the performance of control functions in a node, a "control function adapter." The processor monitors the copy bit (and in ANR mode, also the selective copy bit in the first ANR label) in the each packet on the bus within the node. When it detects a packet which should be copied, it copies the packet into its associated memory and begins processing. A problem with the current art is that it is desirable to be able to distribute control function processors among the various adapters of a node. Distribution of control functions is desirable because certain control functions may be associated with specific links or end users.

Since the copy instruction in the current art is simply a one bit flag, it is not possible for a processor to know which control function is to be performed until it copies an entire packet into its memory and begins processing it. If control function processors are distributed among various adapters of a selected node, each processor in the node must copy every packet in which the copy bit is enabled, and retain the packet in memory long enough to determine whether it contains instructions to perform a control function that the processor is responsible for performing. The processor responsible for the control function will continue processing and perform the function. The other processors will simply discard their copies of the packet. The extra copying and processing wastes time and slows down the operation of the node.

### SUMMARY OF THE INVENTION

The object of this invention is to allow efficient distribution of control functions among various adapters of a packet switching node, and among various nodes of a packet switching network. This is accomplished by expanding the one bit copy flag contained in the network header of a packet to a multi-bit field, called a Copy ID field. Since this copy indication is now multiple bits, it can be used to specify specific control functions which the processors of a node can readily identify. This allows control functions to be distributed among the several adapters of a node without creating unnecessary work for the processors in copying unneeded packets. Since the Copy ID is contained in a control byte near the beginning of the packet, a processor monitoring the bus of a node can quickly identify whether a packet is directing a control function that the processor is responsible for. In our preferred embodiment, the Copy ID field is four bits long. The bit combinations '0001' and '0000' indicate that no control function is specified in the packet, leaving fourteen possible control functions that can be specified by the Copy ID.

This invention greatly improves flexibility in packet switching node design. Control functions can be centralized in a node, and a control function adapter would simply copy and process all packets with a recognized Copy ID. Our invention improves the efficiency of the network in this situation, because often not all nodes in a network perform all control functions. Since a control function adapter can tell quickly whether a packet passing through a node specifies a control function in that node, the control function processor does not have to waste time and resource copying a packet that doesn't specify one of that processor's control functions.

Control functions can also efficiently be distributed among the processors on the various adapters of a node. Each processor can readily identify whether a packet specifies a control function that is the responsibility of that processor by monitoring the Copy ID of each packet. Again an adapter copies a packet only when the Copy ID specified a control function performed by the processor on that adapter.

The Copy ID can also be used in conjunction with the routing information in a packet. For example, the network could be designed so that a processor on an outbound link adapter only copied a packet with a certain control function specified in the Copy ID and an ANR label specifying the link associated with that adapter.

Even a combination of the foregoing is possible; e.g., a processor can be responsible for packets with a given Copy ID and any one of a group of ANR labels, each of which is pointing to a particular link. Since, according to this invention, network control functions can be distributed among the various adapters of a node, the copy function can now find use in source and destination nodes to copy outgoing or incoming packets into control function adapters.

When a packet arrives at a node over a link, the adapter for that inbound link places the packet on the node's switching bus. In addition, this adapter may examine the packet's Copy ID; if the packet has a recognized Copy ID, the packet can be copied and processed by a processor on the adapter.

Some network control functions (e.g., multicast set management) are normally associated with a particular node. Other network control functions (e.g., bandwidth management) are normally associated with a particular link or end point. This invention allows all packets for a particular network control function associated with nodes to be processed by a single processor in each node. On the other hand, packets for network control functions associated with links or end points can be processed by processors on link and end point adapters. The assignment of control functions can be made dynamically to accomplish tasks such as load balancing and fault tolerance.

A function such as bandwidth management can be associated either with the inbound links or the outbound links. Bandwidth management for the forward path is associated with the outbound links; management for the reverse path is associated with the inbound links. Two Copy ID's can be assigned for such a function. The first specifies that the function on the forward path and the second specifies that function on the reverse path. Thus, for example, an inbound link adapter may copy any packet with a Copy ID specifying the function on the reverse path.

It should be noted that our invention is not restricted to use in ANR. For example, in tree multicast mode (TMM), the packet header fields are the same, and the same control byte with the same Copy ID as described above is present. In TMM mode, the routing field contains a single address, a tree address, rather than multiple labels specifying various links. The tree address specifies a "multicast tree" defining a specific set of transmission links and nodes over which the packet is to be multicast to a specific set of end users. When a TMM packet is placed on the bus in a node, each adapter in the node monitors the tree address to determine whether a transmission link or terminal link for which that adapter is responsible is part of the multicast tree specified. If such an adapter's link is part of the multicast tree, the adapter retrieves the packet from the bus and sends it out on the transmission link or passes it to the end user. In TMM mode the Copy ID could be used independently from the routing information just as in ANR. Alternatively, an adapter could copy the packet into its memory only when the Copy ID matched one of its control functions and the tree address matched a tree containing a link for which the adapter is responsible. Multicast trees are described in "Distributed Control for PARIS" by B. Awerbuch, I. Cidon, I. S. Gopal, M. Kaplan and S. Kutten, Proceedings of the Ninth ACM Symposium on Principles of Distributed Computing, Quebec, Canada, August 1990, pp. 145-159.

It should be apparent to those skilled in the art that this invention could find use in any mode in which a control byte containing the Copy ID could be included in the packets. It should also be clear that this invention can be used in many alternative ways to distribute control functions efficiently in a packet network and among various adapters in a node.

### Brief Description of the Drawings

A complete understanding of the present invention may be gained by considering the following detailed description in conjunction with the accompanying drawings, in which:
FIG. 1 shows a general block diagram of a packet communications system in which the present invention might find use;
FIG. 2 shows a general block diagram of a typical node of the communications system of FIG. 1;
FIG. 3 shows a graphical representation of a typical packet transmitted through the communications system of FIG. 1;
FIG. 4 shows a graphical representation of a typical header for the packet of FIG. 3, with Control Byte 2 expanded to show the Copy ID;
FIG. 5 shows a graphical representation of a typical ANR mode routing field of the header of FIG. 4;
FIG. 6 shows a graphical representation of a typical TMM routing field of the header of FIG. 4;
FIG. 7 shows a packet communications network comprising four nodes in a transmission path, each having a centralized control adapter which may perform a network control function;
FIG. 8 shows a packet communications network in which some nodes have control function processors on link adapters.
FIG. 9 shows a general block diagram of the packet communications system of FIG. 1 in which a typical multicast tree is shown in solid lines and the balance of the system is shown in dashed lines;
FIG. 10 shows a flow chart describing how the copy function would be processed in a node having a centralized control processor;
FIG. 11 shows a flow chart describing how the copy function would be processed in a node where the network control function is being performed by a processor in a link adapter;
FIG. 12 shows an expanded version of the "RECEIVE AND PROCESS PACKET" block of FIG. 10 in the case of multiple packets being processed by a node, where the processor is responsible for handling multiple control functions.

### DETAILED DESCRIPTION OF THE INVENTION

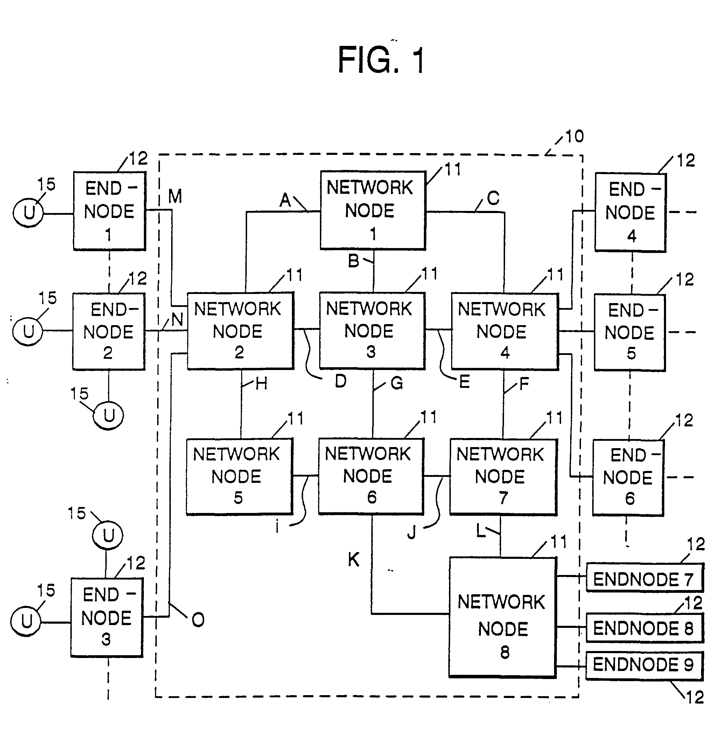

Referring more particularly to FIG. 1, there is shown a general block diagram of a packet transmission system 10 comprising eight network nodes 11 numbered 1 through 8. Each of network nodes 11 is linked to others of the network nodes 11 by one or more communication links A through L. Each such communication link may be either a permanent connection or a selectively enabled (dial-up) connection. Any or all of network nodes 11 may be attached to end nodes 12, network node 2 being shown as attached to end nodes 1, 2 and 3, network node 4 being shown as attached to end nodes 4, 5 and 6, and network node 8 being attached to end nodes 7, 8 and 9. Network nodes 11 each comprise a data processing system which provides data communications services to all connected nodes, network nodes and end nodes. At each node, incoming data packets are selectively routed on one or more of the outgoing communications links terminated at another node. Such routing decisions are made in response to information in the header of the data packet. In addition to the basic packet routing function, the network nodes 11 also perform control functions such as calculating routing paths for packets originated in the node, directory services, and maintenance of network topology databases which are used to support the routing calculations.

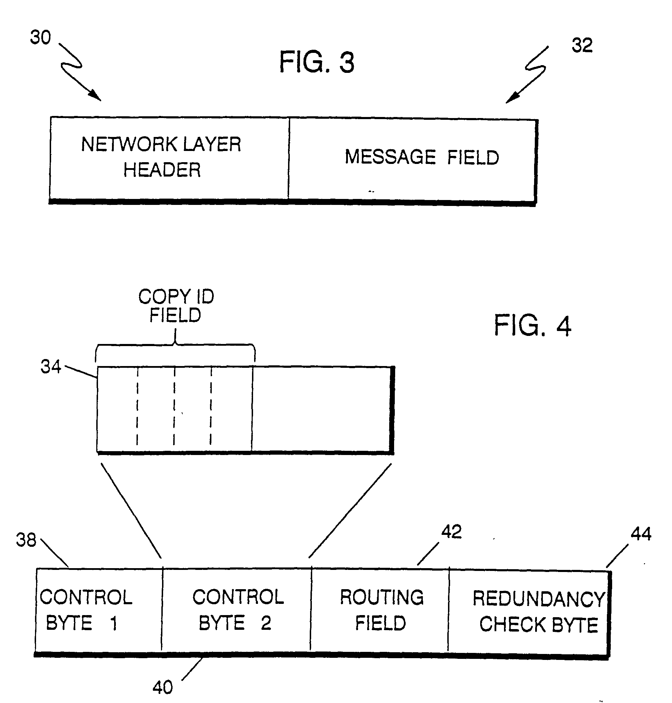

Each of end nodes 12 is connected by way of an adapter to each of a plurality of end users 15. Each of end users 15 comprises either a source of digital data to be transmitted to another end user, a data sink for consuming digital data received from another end user, or, typically, both. End users use the packet communications network 10 of FIG. 1 by connecting to an end node 12 connected to one of the network nodes 11 for access to the packet network 10. The end nodes 12 translate the user's data into packets of the type shown in FIG. 3 for transmission on the packet network of FIG. 1 and generate the headers which are used to route the packets through the network 10. The header has the general form shown in FIG. 4 and includes two control bytes 38 and 40, a routing field 42 and a redundancy check byte 44. The routing field 42 contains the information necessary to route the packet through the packet network 10 to the destination end nodes 12 to which it is addressed. Control byte 40 includes, among other things, a Copy ID according to this invention, as will be further described below.

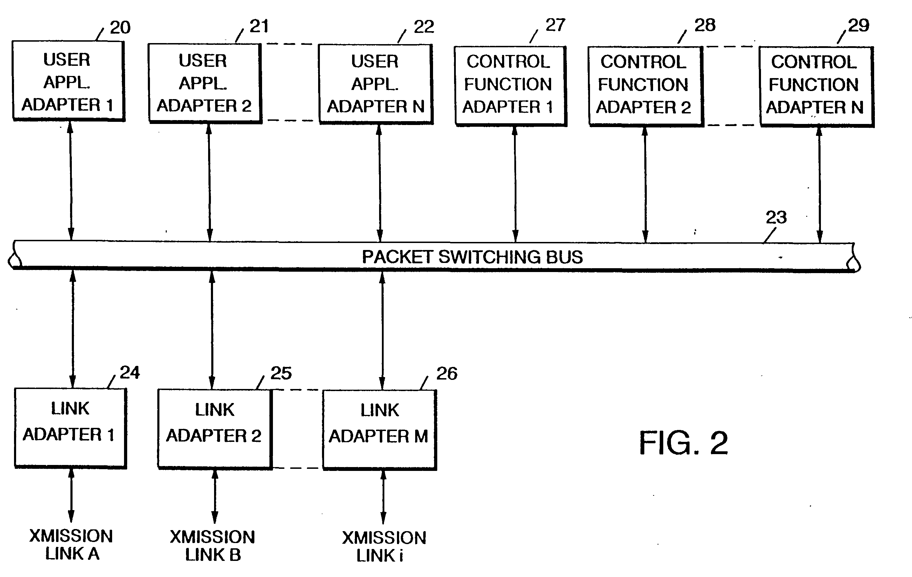

In FIG. 2 there is shown a general block diagram of a typical node such as is found in the network nodes 11 or the end nodes 12 of FIG. 1. The node of FIG. 2 comprises a high speed packet switching bus 23 onto which packets arriving at the node are placed. Such packets arrive over transmission links via link adapters 24, 25, ..., 26, or originate in user applications, corresponding to end users 15 of FIG. 1, in end nodes via application adapters 20, 21, ..., 22. Using information in the packet header, others of the adapters 20-22 and 24-26 determine which packets placed on bus 23 are to be routed to the user application or the transmission link attached to the adapter. The decision point of FIG. 2 thus serves to connect the packets arriving at the decision point to a local user (for end nodes) or to a transmission link leaving the decision point (for network nodes and end nodes). The adapters 20-22 and 24-26 may include queuing circuits for queuing packets prior to or subsequent to switching bus 23. According to one embodiment of this invention, control function adapters 27, 28, ..., 29 may copy a packet and perform appropriate network control functions as specified in the Copy ID 34 of control byte 2 in FIG. 4.

The incoming transmission links to the packet decision point of FIG. 2 may comprise links from local end nodes such as end nodes 12 of FIG. 1 or links from adjacent network nodes 11 of FIG. 1. In any case, the decision point of FIG. 2 operates in the same fashion to receive each data packet and forward it on to another decision point as dictated by the information in the packet header. The packet network of FIG. 1 thus operates to enable communication between any two end users 15 of FIG. 1 without dedicating any transmission or node facilities to that communication path except for the duration of a single packet. In this way, the utilization of the communication facilities of the packet network is optimized to carry significantly more traffic than would be possible with dedicated transmission links for each communication path.

FIG. 4 represents a typical network layer header comprising control byte fields 38 and 40, routing field 42 and redundancy check byte 44. Control byte 1 field 38 is an eight-bit field specifying the routing mode and priority to be employed. Possible routing modes are automatic network routing (ANR) and tree multicast (TMM). Possible priorities relate to whether or not the message is real time or non-real time. There is also a reverse path accumulation bit provided to enable the construction of a string of ANR labels representing the reverse path as the packet flows hop-by-hop in the forward direction toward the destination end point. The destination end point can place the resulting reverse string in the routing field of packets it wishes to send to the source end point in reply to the forwarded message.

Control byte 2, field 40, is also an eight-bit field primarily specifying according to this invention the copy function in its first four bits, the Copy ID field 34. If the first three bits are '0', no network control function is specified and the copy function is disabled. Other four-bit combinations can be assigned to specific network control functions such as bandwidth reservation for the forward path, bandwidth reservation for the reverse path, set management, and tree maintenance. This represents a significant improvement over the prior art in which the first bit of control byte 2 determined only whether the copy function was enabled.

Routing field 42 is a multibyte field. When ANR is specified in control byte 1, the routing field has subfields containing the routing labels for each link to be traversed and a label for the destination end point. When TMM routing is specified, the routing field has a subfield containing a tree address. For either routing mode, the routing field may contain reverse path labels. For ANR routing, the individual labels are read in each node traversed. The routing label last used is then stripped from the field as the packet progresses along the transmission path.

The first bit of the first byte of an ANR label is defined as the "selective copy" bit. (Tree addresses do not include a selective copy bit. If the copy function is enabled in the packet, it is enabled for every node in the tree.) When the "selective copy" bit is set to '0' in the first label, the copy function is enabled in the current node. According to this invention, the function to be performed at each node in the path at which the "selective copy" bit is active is determined by the setting of the first four bits of control byte 2 (other than the occurrence of three '0s' in the first three bits of the Copy ID). The copy function is disabled in that node if the selective copy bit is set to '1'.

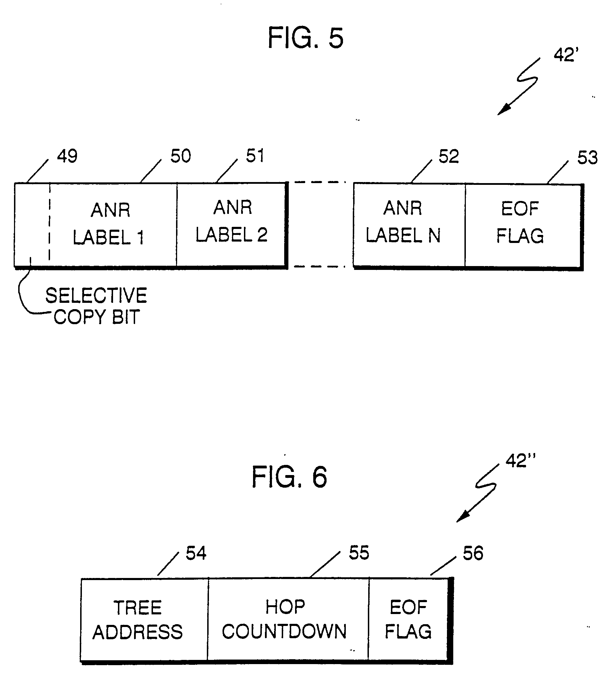

FIG. 5 shows the typical ANR routing field of FIG. 4 in more detail. Routing field 42' comprises ANR labels 50 through 52 for each link to be traversed and the destination end point and an end-of-field flag 53 containing the reserved eight-bit combination '11111111'. Routing subfield 50 is further expanded to show the selective copy bit 49.

FIG. 6 shows the routing field of FIG. 4 in TMM routing. In this case, there is only one address, the tree address designated 54. The hop countdown field 55 is set to the maximum number of hops that will be allowed for the packet, and is decremented at each hop. When the value in the field reaches '0', the packet is discarded. Numeral 56 designates the same EOF flag as used in ANR.

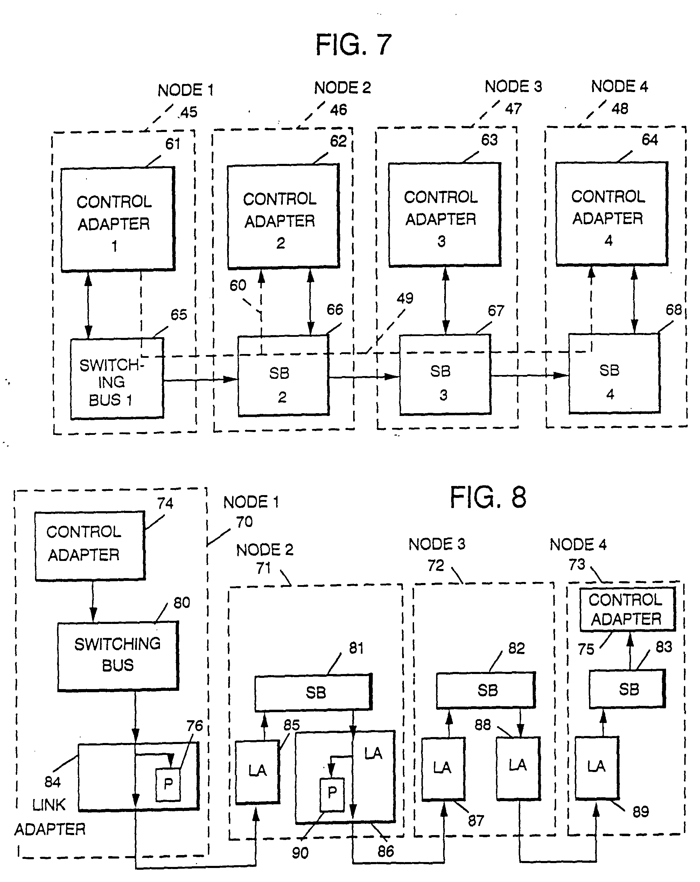

FIG. 7 shows a packet switched network comprising four nodes in a transmission path 45-48. In each node there is shown a control adapter containing a processor for a particular network control function 61 through 64 and a switching bus (SB) 65 through 68. For simplicity, Link Adapters are not shown but are understood to exist. Control Adapter 61 is the source end point. Control Adapter 62 and Control Adapter 63 are in intermediate nodes. Control Adapter 64 is the destination end point. The dashed line 49 terminated in an arrowhead indicates the transmission path of an ANR packet between the source and destination nodes through the two intermediate nodes. At the first intermediate node comprising control Adapter 62 and SB 66, the "selective copy" bit is set to '0' and the packet traversing SB 66 is therefore copied into Control Adapter 62 as indicated by shunt path 60. The expanded copy function could also be used in the same source and destination nodes designated 45 and 48 if additional adapters were present in these nodes.

At the second intermediate node, the selective copy bit is set to '1' and copy is not enabled. In this example network, processing for the network control function is handled by a centralized control unit.

FIG. 8 shows a packet switched network comprising four nodes in a transmission path, 70-73. In each node there are link adapters, 84-89, two of which contain a processor for a particular network control function. Each node also contains a switching bus (SB) 80-83. Link adapter 86 in node 2 shows in detail processor 90. Link Adapter 84 in node 1 shows in detail processor 76. In the case where control functions are performed in an outbound link adapter, the link adapter processor must route the packet according to the first ANR label (or TMM address) and determine whether to receive and process the packet to perform a control function based on the Copy ID, and in ANR, on whether the "selective copy" bit is active for that node. In FIG. 8, a packet being routed from the control adapter 74 in the first node to the control adapter 75 in node 4 is copied and processed by the processor contained in link adapter 84 in node 1, the source node. A packet is also copied and processed by the processor contained in link adapter 86 in node 2.

In the case where control functions are performed in an inbound link adapter, the link adapter processor must determine whether to receive and process the packet to perform a control function based on the Copy ID, and in ANR, on whether the "selective copy" bit is active for the node. In Fig. 8, if a packet were being routed from control adapter 75 in node 4 to control adapter 74 in node 1, the packet would be copied and processed by processor 90 in link adapter 86 of node 2. The packet also would be copied and processed by the processor in link adapter 84 of node 1, the destination node.

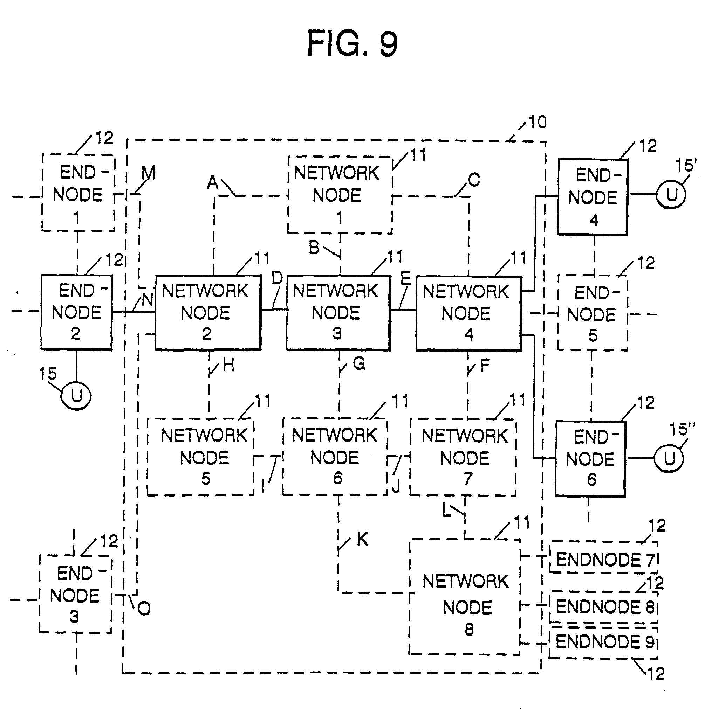

FIG. 9 shows a typical multicast tree comprising network nodes 2, 3, and 4 (in solid lines) imposed on the packet communication system of FIG. 1. Note that the end nodes 2, 4 and 6 are interconnected by the tree of FIG. 9. It is to be noted that other subsets of the end nodes of FIG. 9 could be connected by other multicast trees and, indeed, each end node may well participate in more than one such tree. In any event, the purpose of the multicast tree is to provide a convenient and efficient mechanism for exchanging messages among the members of the tree by providing a simple and efficient routing mechanism. In our embodiment, the Copy ID function is used in the TMM mode even though there is no "selective copy bit" present in the TMM mode. The appropriate processor in a node determines whether there is a network control function specified by determining whether the first three bits in the Copy ID are 0's. If the first three bits are 0, no network control function is specified.

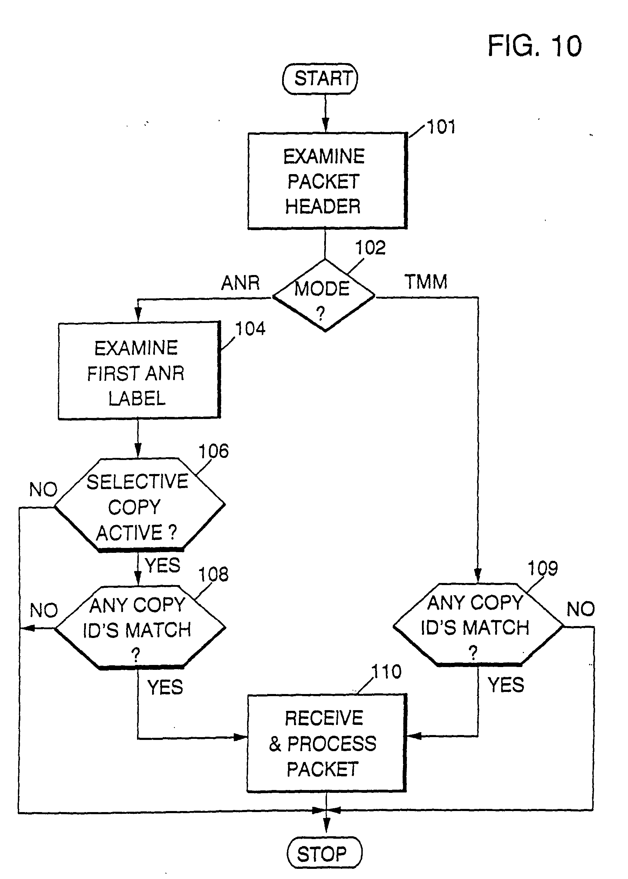

FIG. 10 is a flowchart showing the process of receiving and processing a packet containing a Copy ID in the case where the network control function is performed by a processor in a control adapter, as in the network of FIG. 7. In this case the packet has already been placed on the switching bus of the node by an adapter. The processor first examines the packet header at 101, and makes a determination as to whether the ANR mode or TMM is specified at 102. If the packet specifies the ANR mode the processor examines the first ANR label at 104 to determine if the selective copy bit is set to "active" at 106. If the answer is no, the packet continues through the node and no processing is performed by the control function processor. If the answer is yes, the processor determines whether the Copy ID matches any of the bit patterns designated for control functions in that node for which it is responsible, block 108. There could be multiple processors in the node. If the answer is yes, the packet is received and processed at block 110. In the case of TMM routing, there is no selective copy bit; the process goes immediately from a mode determination at 102 to a determination of whether or not the Copy ID matches a known network control function at 109.

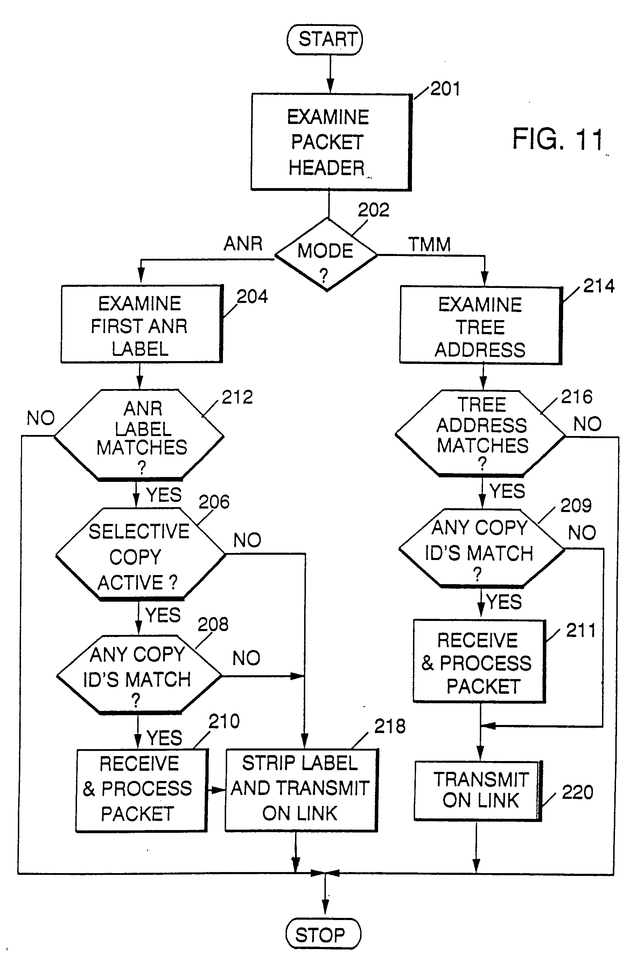

FIG. 11 is a flowchart showing the process of receiving and processing a packet containing a Copy ID in the case where the control function is performed by a processor in an outbound link adapter, as is the case with the network illustrated in FIG. 8. In this case, the Copy ID is being used in conjunction with the routing information in the packet header. In accordance with this requirement, FIG. 11 shows, for ANR mode, the steps of examining the first ANR label and determining if it matches the address for the particular adapter, 204 and 212, and, if the ANR label matches, stripping the first label and transmitting the packet on the link, 218. In TMM, the tree address must be examined and a determination must be made whether it matches a tree which contains the particular adapter, blocks 214 and 216. The packet must then be transmitted on the link at 220 if the link is in fact in the tree which the packet is meant for. The steps for processing the Copy ID as shown by blocks 206, 208 and 210 in the case of ANR, and 209 and 211 in the case of TMM, are the same as in the control adapter case of FIG. 10.

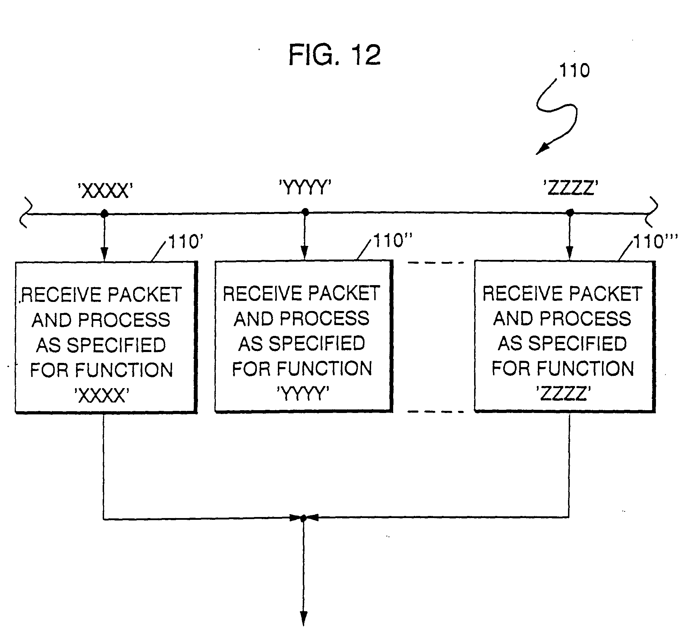

FIG. 12 shows the "RECEIVE AND PROCESS PACKET" block, 110, of FIG. 10 expanded for the case where multiple packets are being processed in succession, each with a different network control function specified. This illustrates that a single processor can be responsible for more than one function. The same type of expansion could be applied to the case of the link adapter shown in FIG. 11.

The copy function according to the preferred embodiment of this invention operates by assigning four-bit codes in the control byte 2 field in the network layer header for each of as many as fourteen network control functions. (At least two of these four-bit codes '0000' and '0001' indicate that no network control function is to be employed.) One of the active codes is set in the control byte 2 field. For example, bandwidth reservation can be the desired network control function. Finally, the message field of the packet, in the case of the bandwidth reservation function, can specify the amount of bandwidth to be reserved on the outgoing link of each selected node.

## Claims

1. A method for use in a transmitting apparatus of sending a packet having a header and a routing field and containing control function information over a computer network (10) which includes a plurality of nodes (11) comprising transmitting and receiving apparatus adapted to be connected within said network, said method **characterised in that** it comprises the steps of:
generating said packet containing within the header a multiple-bit Copy ID field (34) representing a specific, previously assigned control function to be performed in one or more receiving apparatus contained in the nodes of said network; and
transmitting said packet to said one or more receiving apparatus via said computer network so that said one or more receiving apparatus can identify said control function specified in said multiple-bit Copy ID field without copying all of said packet into a memory.

2. The method of Claim 1 wherein said routing field (42) includes:
one or more labels (50, 51, 52), each label identifying a selected other node in said network at which said previously assigned control function specified by said multiple-bit Copy ID field (34) is to be performed.

3. The method of Claim 2 wherein:
each label contains a selective copy bit (49), the selective copy bit in a specified label determining whether said control function is to be performed at said selected other node.

4. The method of Claim 1 wherein said routing field (42) includes:
a tree multicast mode field which identifies a selected group of other nodes in said network at which said control function specified by said multiple-bit Copy ID (34) is to be performed.

5. A method for use in a receiving apparatus of processing a packet having a header and a routing field, and containing control function information over a computer network (10) which includes a plurality of nodes (11) comprising transmitting and receiving apparatus adapted to be connected within said network, the method **characterised in that** it comprises the steps of:
examining said packet containing within the header a multiple-bit Copy ID field (34) representing a specific, previously assigned control function to be performed in one or more receiving apparatus in said nodes in said network;
determining, without copying the entire packet into a memory, if said specific, previously assigned control function is to be performed at said receiving apparatus;
if said specific, previously assigned control function is to be performed at said receiving apparatus:
processing said packet; and
performing said specific, previously assigned control function.

6. The method of Claim 5 wherein said routing field (42) includes:
one or more labels (50, 51, 52), each of said labels identifying a selected node in said network, one or more of the selected nodes having a control function adapter at which said previously assigned control function specified by said multiple-bit Copy ID (34) is to be performed.

7. The method of Claim 5 wherein said routing field (42) includes:
one or more labels, each of said labels identifying a selected node in said network, one or more of the selected nodes having a link adapter, said link adapter having a control processor for performing the previously assigned control function specified by said multiple-bit Copy ID.

8. The method of Claim 5 wherein said routing field (42) includes:
a tree multicast mode field which identifies a selected group of nodes in said network at which said previously assigned control function specified by said multiple-bit Copy ID (34) is to be performed.

9. The method of Claim 6 further including the step of:
examining a label at the selected node and determining if a selective copy function (49) is active for said selected node such that the previously assigned control function specified by said multiple-bit Copy ID is enabled in said selected node.

10. The method according to Claim 7 further including the step of:
examining a label at the selected node and determining if a selective copy function is active for said selected node such that the previously assigned control function specified by said multiple-bit Copy ID is enabled in said selected node.

11. The method of Claim 5 further including the step of:
examining said routing field (42") to determine whether to process said message.

12. A transmitting apparatus comprising means for carrying out the steps of the method according to anyone of Claims 1 to 4.

13. A receiving apparatus comprising means for carrying out the steps of the method according to anyone of Claims 5 to 11.

## Patentansprüche

1. In einem Übertragungsgerät anzuwendendes Verfahren zum Versenden eines Pakets mit Steuerinformationen sowie einem Header und einem Routing-Feld über ein Computernetz (10) mit einer Vielzahl von Knoten (11), das ein Sende- und Empfangsgerät umfaßt, die so gestaltet wurden, daß sie innerhalb des besagten Netzes angeschlossen werden können, wobei das besagte Verfahren **dadurch gekennzeichnet ist, daß** es folgende Schritte umfaßt:
Generieren des besagten Pakets, das innerhalb des Header ein Mehrbitfeld mit einer Copy-ID (34) enthält, das eine spezielle, vorher zugewiesene Steuerfunktion repräsentiert, die in einem oder mehreren Empfangsgeräten auszuführen ist, die in die Knoten des besagten Netzes integriert sind; und
Übertragung des besagten Pakets über das besagte Computernetz an das besagte eine bzw. die besagten mehreren Empfangsgerät(e), so daß das besagte eine bzw. die besagten mehreren Empfangsgerät(e) die besagte Steuerfunktion identifizieren kann, die in dem besagten Mehrbitfeld mit einer Copy-ID spezifiziert ist, ohne daß das gesamte besagte Paket in einen Speicher kopiert werden muß.

2. Verfahren nach Anspruch 1, wobei das besagte Routing-Feld (42) folgendes umfaßt:
Eine oder mehrere Kennungen (50, 51, 52), wobei jede Kennung die Identifikation für einen ausgewählten anderen Knoten in dem besagten Netz ist, an dem die besagte, vorher zugewiesene Steuerfunktion, welche durch das besagte Mehrbitfeld mit Copy-ID (34) spezifiziert ist, ausgeführt werden muß.

3. Verfahren nach Anspruch 2, wobei:
jede Kennung ein selektives Copy-Bit (49) enthält, wobei dieses selektive Copy-Bit in einer spezifizierten Kennung bestimmt, ob die besagte Steuerfunktion an dem besagten, ausgewählten anderen Knoten auszuführen ist.

4. Verfahren nach Anspruch 1, wobei das besagte Routing-Feld (42) folgendes umfaßt:
ein baumähnliches Multicast-Modusfeld, das eine ausgewählte Gruppe anderer Knoten in dem besagten Netz identifiziert, an denen die besagte Steuerfunktion, welche durch die besagte Mehrbit-Copy-ID spezifiziert ist, ausgeführt werden soll.

5. In einem Empfangsgerät anzuwendendes Verfahren zum Verarbeiten eines Pakets mit Steuerinformationen sowie einem Header und einem Routing-Feld über ein Computernetz (10) mit einer Vielzahl von Knoten (11), das ein Sende- und Empfangsgerät umfaßt, die so gestaltet wurden, daß sie innerhalb des besagten Netzes angeschlossen werden können, wobei das Verfahren **dadurch gekennzeichnet ist, daß** es folgende Schritte umfaßt:
Überprüfen des besagten Pakets, das innerhalb des Header ein Mehrbitfeld mit einer Copy-ID (34) enthält, das eine spezielle, vorher zugewiesene Steuerfunktion repräsentiert, die in einem oder mehreren Empfangsgeräten auszuführen ist, die in die besagten Knoten des besagten Netzes integriert sind;
Bestimmen (ohne das gesamte Paket in einen Speicher zu kopieren), ob die besagte spezielle, vorher zugewiesene Steuerfunktion an dem besagten Empfangsgerät auszuführen ist;
Falls die besagte spezielle, vorher zugewiesene Steuerfunktion an dem besagten Empfangsgerät auszuführen ist:
Verarbeiten des besagten Pakets; und
Ausführen der besagten speziellen, vorher zugewiesenen Steuerfunktion.

6. Verfahren nach Anspruch 5, wobei das besagte Routing-Feld (42) folgendes umfaßt:
Eine oder mehrere Kennungen (50, 51, 52), wobei jede dieser Kennungen zur Identifikation eines ausgewählten Knotens innerhalb des besagten Netzes dient, wobei einer oder mehrere dieser ausgewählten Knoten über einen Steuerfunktionsadapter verfügt bzw. verfügen, an dem die besagte, vorher zugewiesene und von der besagten Mehrbit-Copy-ID (34) spezifizierte Steuerfunktion auszuführen ist.

7. Verfahren nach Anspruch 5, wobei das besagte Routing-Feld (42) folgendes umfaßt:
Eine oder mehrere Kennungen, wobei jede dieser Kennungen zur Identifikation eines ausgewählten Knotens innerhalb des besagten Netzes dient, wobei einer oder mehrere dieser ausgewählten Knoten über einen Verbindungsadapter verfügt bzw. verfügen, wobei der besagte Verbindungsadapter mit einem Steuerprozessor ausgestattet ist, der zur Ausführung der vorher zugewiesenen und von der besagten Mehrbit-Copy-ID (34) spezifizierten Steuerfunktion dient.

8. Verfahren nach Anspruch 5, wobei das besagte Routing-Feld (42) folgendes umfaßt:
ein baumähnliches Multicast-Modusfeld, das eine ausgewählte Gruppe von Knoten in dem besagten Netz identifiziert, an welchen die besagte, vorher zugewiesene Steuerfunktion, welche durch die besagte Mehrbit-Copy-ID (34) spezifiziert ist, ausgeführt werden soll.

9. Verfahren nach Anspruch 6, das darüber hinaus folgenden Schritt umfaßt:
Überprüfen einer Kennung an dem ausgewählten Knoten und Bestimmen, ob eine selektive Copy-Funktion (49) für den besagten ausgewählten Knoten aktiviert ist, so daß die vorher zugewiesene Steuerfunktion, welche durch die besagte Mehrbit-Copy-ID (34) spezifiziert ist, in dem besagten ausgewählten Knoten aktiviert wird.

10. Verfahren nach Anspruch 10, das darüber hinaus folgenden Schritt umfaßt:
Überprüfen einer Kennung an dem ausgewählten Knoten und Bestimmen, ob eine selektive Copy-Funktion für den besagten ausgewählten Knoten aktiviert ist, so daß die vorher zugewiesene Steuerfunktion, welche durch die besagte Mehrbit-Copy-ID spezifiziert ist, in dem besagten ausgewählten Knoten aktiviert wird.

11. Verfahren nach Anspruch 5, das darüber hinaus folgenden Schritt umfaßt:
Überprüfen des besagten Routing-Feldes (42''), um zu bestimmen, ob die besagte Nachricht zu verarbeiten ist.

12. Übertragungsgerät, das Elemente zum Ausführen der Schritte des Verfahrens entsprechend einem der Ansprüche 1 bis 4 umfaßt.

13. Empfangsgerät, das Elemente zum Ausführen der Schritte des Verfahrens entsprechend einem der Ansprüche 5 bis 11 umfaßt.

## Revendications

1. Un procédé pour utilisation dans un dispositif de transmission assurant l'envoi d'un paquet ayant une en-tête et un champ d'acheminement et contenant une information de fonction de contrôle sur un réseau d'ordinateurs (10) incluant une pluralité de noeuds (11), comprenant un dispositif de transmission et de réception adapté pour être connecté dans ledit réseau, ledit procédé étant **caractérisé en ce qu'**il comprend les étapes consistant à :
générer ledit paquet contenant dans l'en-tête un champ copie d'ID (34) à bits multiples, représentant une fonction de contrôle affectée antérieurement spécifique, devant être exécutée sur un ou plusieurs dispositifs récepteurs contenus dans les noeuds dudit réseau; et
transmettre ledit paquet audit un ou plusieurs dispositifs récepteurs, via ledit réseau d'ordinateurs, de manière que ledit un ou plus dispositifs récepteurs puisse identifier ladite fonction de contrôle spécifiée dans ledit champ copie d'ID à bits multiples, sans avoir à copier la totalité dudit paquet en mémoire.

2. Le procédé selon la revendication 1, dans lequel ledit champ d'acheminement (42) comprend :
une ou plusieurs étiquettes (50, 51, 52), chaque étiquette identifiant un autre noeud sélectionné dans ledit réseau auquel ladite fonction de contrôle affectée antérieurement, spécifiée par ledit champ de copie d'ID (34) à bits multiples, doit être exécutée.

3. Le procédé selon la revendication 1, dans lequel chaque étiquette contient un bit de copie sélective (49), le bit de copie sélective, dans une étiquette spécifiée, déterminant si ladite fonction de contrôle doit être exécutée audit autre noeud sélectionné.

4. Le procédé selon la revendication 1, dans lequel ledit champ d'acheminement (42) comprend :
un champ à mode de diffusion partielle en arbre, identifiant un groupe sélectionné d'autres noeuds dans ledit réseau auquel ladite fonction de contrôle spécifiée par ledit champ de copie d'ID (34) à bits multiples doit être exécutée.

5. Un procédé pour utilisation dans un dispositif récepteur assurant le traitement d'un paquet ayant une en-tête et un champ d'acheminement, et contenant une information de fonction de contrôle, sur un réseau d'ordinateur (10) comprenant un dispositif transmetteur et récepteur adapté pour être connecté dans ledit réseau, le procédé étant **caractérisé en ce qu'**il comprend les étapes consistant à :
examiner ledit paquet contenant dans l'en-tête un champ de copie d'ID (34), à bits multiples, représentant une fonction de contrôle affectée antérieurement, spécifique, devant être exécutée en un ou plusieurs appareils récepteurs dans ledit noeud dans ledit réseau;
déterminer, sans copier la totalité du paquet en mémoire, si ladite fonction de contrôle affectée antérieurement, spécifique, doit être exécutée audit dispositif récepteur;
si ladite fonction de contrôle affectée antérieurement, spécifique, doit être exécutée audit appareil récepteur:
traiter ledit paquet; et
exécuter ladite fonction de contrôle, affectée antérieurement, spécifique.

6. Le procédé selon la revendication 5, dans lequel ledit champ d'acheminement (42) comprend:
une ou plusieurs étiquettes (50, 51, 52), chacune desdites étiquettes identifiant un noeud sélectionné dans ledit réseau, un ou plusieurs des noeuds sélectionnés ayant un adaptateur de fonction de contrôle auquel ladite fonction de contrôle affectée antérieurement, spécifiée par ledit champ de copie d'ID (34) à bits multiples, doit être exécutée.

7. Le procédé selon la revendication 5, dans lequel ledit champ d'acheminement (42) comprend:
une ou plusieurs étiquettes, chacune desdites étiquettes identifiant un noeud sélectionné dans ledit réseau, un ou plusieurs des noeuds sélectionnés ayant un adaptateur de liaison, ledit adaptateur de liaison ayant un processeur de contrôle pour effectuer la fonction de contrôle affectée antérieurement, spécifiée par ledit champ de copie d'ID à bits multiples.

8. Le procédé selon la revendication 5, dans lequel ledit champ d'acheminement (42) comprend :
un champ à mode à diffusion partielle en arbre, identifiant un groupe sélectionné de noeud dans ledit réseau, auquel ladite fonction de contrôle antérieurement affectée, spécifiée par ledit champ de copie d'ID (34) à bits multiples, doit être exécutée.

9. Le procédé selon la revendication 6, comprenant en outre l'étape consistant à :
examiner une étiquette au noeud sélectionné et déterminer si une fonction de copie sélective (49) est active pour ledit noeud sélectionné, de manière que la fonction de contrôle affectée antérieurement, spécifiée par ledit champ de copie d'ID à bits multiples, soit validée audit noeud sélectionné.

10. Le procédé selon la revendication 7, comprenant en outre l'étape consistant à :
examiner une étiquette au noeud sélectionné et déterminer si une fonction de copie sélective est active pour ledit noeud sélectionné, de manière que la fonction de contrôle affectée antérieurement, spécifiée par ladite copie d'ID à bits multiples, soit validée audit noeud sélectionné.

11. Le procédé selon la revendication 5, comprenant en outre l'étape consistant à :
examiner ledit champ d'acheminement (42") afin de déterminer s'il faut traiter ledit message.

12. Un dispositif de transmission, comprenant des moyens pour exécuter les étapes du procédé selon l'une quelconque des revendications 1 à 4.

13. Un dispositif de réception, comprenant des moyens pour exécuter les étapes du procédé selon l'une quelconque des revendications 5 à 11.
